# EUROPÄISCHE PATENTSCHRIFT

(11) **EP 0 395 996 B1**
(45) Veröffentlichungstag und Bekanntmachung des Hinweises auf die Patenterteilung: **14.07.1993**
(21) Anmeldenummer: 90107743.8
(22) Anmeldetag: 24.04.1990
(51) Int. Cl.: B23C 3/12

(54) **Profiliervorrichtung für Ecken an plattenförmigen Werkstücken**
Profile cutting device for corners of plate-like workpieces
Dispositif pour couper des profilés pour coins de pièces plates

(30) Priorität: 29.04.1989 DE 3914353
(43) Veröffentlichungstag der Anmeldung: 07.11.1990
(73) Patentinhaber: REICH Spezialmaschinen GmbH, 72622 Nürtingen (DE)
(72) Erfinder: Brandstetter, Helmut, D-7440 Nürtingen (DE); Binder, Werner, D-7000 Stuttgart 80 (DE)
(74) Vertreter: Hoeger, Stellrecht & Partner

(56) Entgegenhaltungen:
- EP-A- 0 086 283
- US-A- 4 787 786
- PATENT ABSTRACTS OF JAPAN vol. 7, no. 215 (M-244)(1360) 22 September 1983, & JP-A-58 109260 (NIHON ITA GLASS K.K.) 29 Juni 1983,

## Beschreibung

Die Erfindung bezieht sich auf eine Profiliervorrichtung für Ecken gemäß Oberbegriff von Anspruch 1.

Zum Profilieren an Ecken von plattenförmigen Werkstücken, deren Seitenflächen im allgemeinen mit Umleimern versehen sind, ist es bekannt, den Fräsmotor mit dem Fräswerkzeug auf einem in drei zueinander senkrechten Richtungen beweglichen Kreuzschlitten zu lagern und den Fräsmotor mittels Druckluftzylinder gegen das Werkstück zu verschieben. Mit dem Fräsmotor verbundene Tastrollen führen dabei das Werkzeug von der Oberseite des plattenförmigen Werkstücks über die Seitenflache bis zur Unterseite. Weist nun die Seitenfläche eine unregelmäßige und unsymetrische Kontur auf, so ist es sehr schwierig, das Werkzeug mittels der verschiedenen Druckluftzylinder so zu steuern, daß ein einwandfreies Fräsbild entsteht. Diese Steuerung erfolgt über die genaue Einstellung der Zylinder und von Drosseln, was mit einem erheblichen Zeitaufwand verbunden ist.

Aufgabe der vorliegenden Erfindung ist daher die Schaffung einer Profiliervorrichtung der eingangs genannten Art, mit der die Ecken von plattenförmigen Werkstücken auch bei unregelmäßigem und unsymetrischem Querschnitt der Seitenflächen einwandfrei bearbeitbar sind, wobei sich die Vorrichtung rasch und sicher auf jeden gewünschten Querschnitt einstellen läßt.

Die Aufgabe wird erfindungsgemäß durch das im kennzeichnenden Teil des Anspruchs 1 angegebenen Merkmal gelöst.

Durch die schwenkbare Lagerung des Fräsmotors am Gehäuse wird das Fräswerkzeug von der Plattenoberseite über die Seitenfläche zur Unterseite verschwenkt, wobei der Fräsmotor in allen Winkelstellungen radial gegen das Werkstück gedrückt wird. Dabei ergibt sich ein gleichmäßiger Anpreßdruck für das Fräswerkzeug und ein einwandfreies Fräsbild bei beliebigen Konturen der Seitenflächen.

Wird als Schwenkorgan erfindungsgemäß ein Ring verwendet, so läßt sich der Fräsmotor einfach und sicher innerhalb des Rings an Führungsstangen verschiebbar lagern. Ein gegenläufig zum Fräsmotor bewegbares Gegengewicht wirkt dem Gewicht des Fräsmotors entgegen, so daß in allen Winkelstellungen die gleiche Anpreßkraft gewährleistet ist.

Das Gehäuse, an dem das Schwenkorgan befestigt ist, läßt sich gegen ein Untergestell mit Auflageflächen für das Werkstück in Höhenrichtung verschieben. Damit ist es möglich, den Mittelpunkt des Schwenkorgans so einzustellen, daß er in der Mitte des Werkstücks und um die halbe Werkstückdicke von dessen vorderer Seitenfläche entfernt liegt. Damit ist wieder ein optimaler Angriff des Fräswerkzeugs am Werkstück gewährleistet.

Zur Steuerung der Profilierungsvorrichtung ist erfindungsgemäß eine Steuereinheit vorgesehen, die das Verschieben des Fräsmotors gegen das Werkstück und dessen Abheben steuert und einen raschen und sicheren Fräsvorgang gewährleistet.

Ist die Ecke eines plattenförmigen Werkstücks mit unsymetrischer Seitenfläche zu bearbeiten, dann muß das Werkstück nach Bearbeiten der ersten Ecke umgeschlagen werden, d.h. die seitherige Oberseite des Werkstücks liegt jetzt unten. Die zweite Ecke weist jetzt im eingelegten Zustand einen umgekehrten Verlauf der Kontur auf, so daß ein Endschalter vorgesehen ist, der eine zweite Steuereinheit aktiviert, so daß das Programm der umgekehrten Kontur angepaßt wird.

Die erfindungsgemäße Profiliervorrichtung kann sowohl als selbständige Einheit neben einer einfachen Kantenanleimmaschine benützt werden, es ist jedoch auch möglich, die Profiliervorrichtung direkt an eine Kantenanleimmaschine anzubringen.

In diesem Fall ist sie auf einem Schlitten angeordnet, der in Vorschubvorrichtung der Werkstücke bewegbar ist und durch diese mitgenommen wird.

Während des Durchlaufs kann dabei das Fräswerkzeug entlang einer Seitenfläche um das ganze Werkzeug so herumgeführt werden, daß sowohl die Längskanten der Seitenfläche als auch deren Ecken profiliert werden.

Im folgenden sind Ausführungsbeispiele der Erfindung unter Bezugnahme auf die Zeichnungen näher beschrieben.

Es zeigen:
- Fig. 1: Profiliervorrichtung, Ansicht von vorne, ohne Klemmvorrichtung
- Fig. 2: Profiliervorrichtung, Schnitt nach Linie II-II in Fig. 1
- Fig. 3: Kantenanleimmaschine mit Profiliervorrichtung, Ansicht von hinten

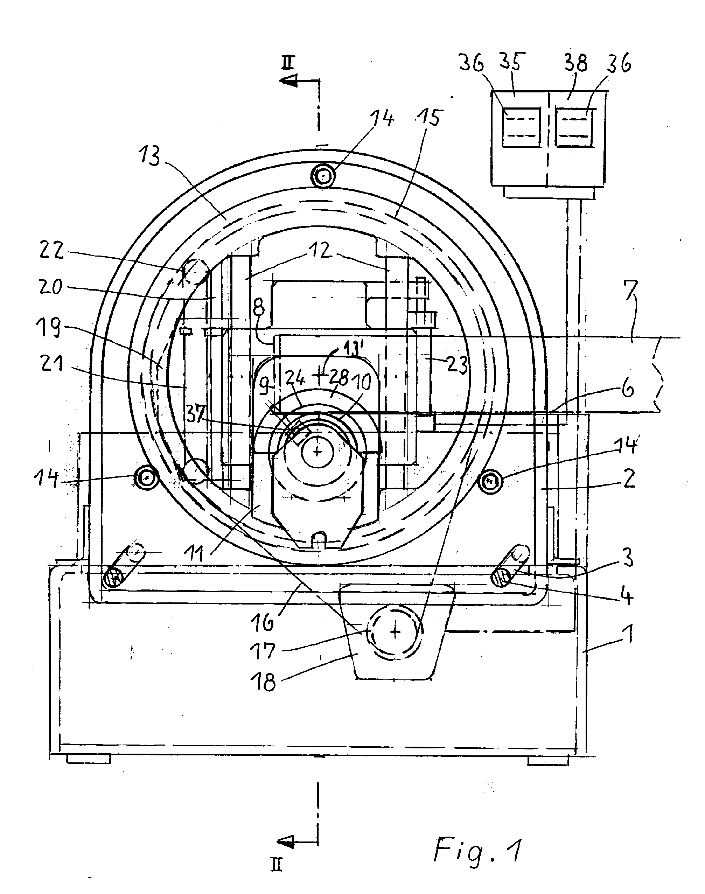

Wie Fig. 1 zeigt, ist in einem Untergestell 1 ein Gehäuse 2 höhenverschiebbar gelagert. Dazu weist das Untergestell 1 geneigt verlaufende Schlitze 3 auf, in die mit dem Gehäuse 2 verbundene Stehbolzen 4 eingreifen, wobei das Gehäuse durch Knebelmuttern 5 am Untergestell 1 anklemmbar ist.

Das Untergestell 1 weist eine Auflagefläche 6 für das Werkstück 7 auf, dessen seine Seitenfläche 8 abschließende Ecke 9 von einem Fräswerkzeug 10 bearbeitet werden soll.

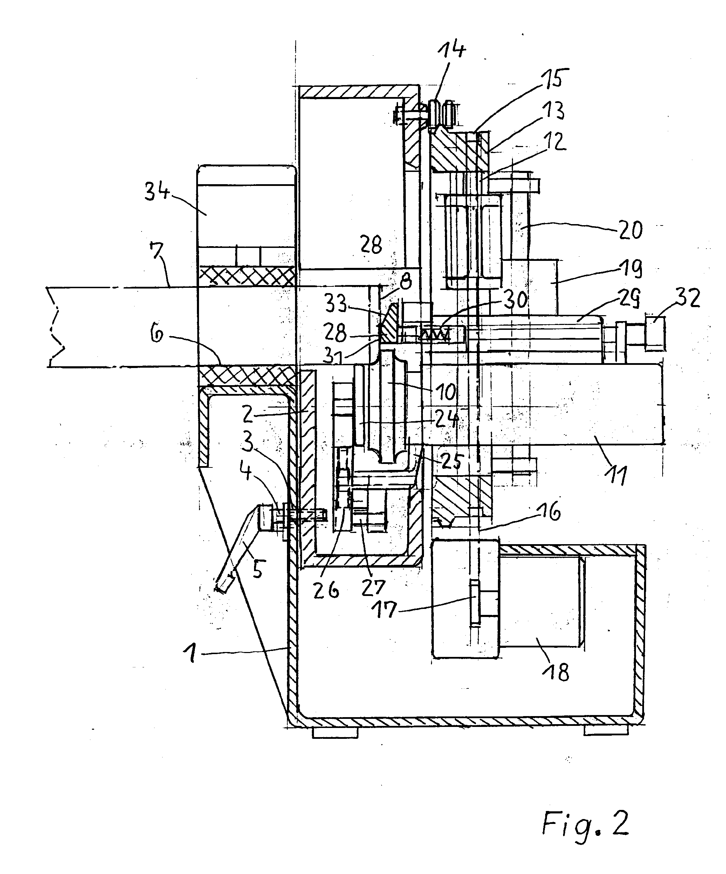

Wie auch Fig. 2 zeigt, ist das Fräswerkzeug 10 von einem Fräsmotor 11 antreibbar, der mittels zweier Führungsstangen 12 in einem Schwenkorgan 13 um eine zur Achse des Fräswerkzeugs 10 parallelen Achse schwenkbar am Gehäuse 2 gelagert ist.

Das Schwenkorgan 13 ist in Form eines Führungsringes ausgebildet, zu dessen Aufnahme Führungsrollen 14 dienen, die am Gehäuse 2 frei drehbar gelagert sind.

Das Schwenkorgan 13 weist einen Zahnkranz 15 auf, mit dem eine Zahnkette 16 zusammenwirkt. Diese Zahnkette 16 greift andererseits in ein Antriebsritzel 17 eines Schwenkmotors 18 ein, der mit dem Gehäuse 2 fest verbunden ist.

Zum Ausgleich des Gewichts des Fräsmotors 11 ist ein Gegengewicht 19 vorgesehen, das ebenfalls an einer Führungsstange 20 verschiebbar im Schwenkorgan 13 gelagert ist. Es ist mit einem Drahtseil 21 über Umlenkrollen 22 so mit dem Fräsmotor 11 verbunden, daß es eine zu diesem gegenläufige Bewegung ausführt.

Zum Verschieben des Fräsmotors 11 dient ein Verschiebeaggregat 23 in Form eines Druckluftzylinders, zur Führung des Fräswerkzeuges 10 dient eine Tastrolle 24, die konzentrisch zum Fräswerkzeug am Fräsmotor 11 gelagert ist. Für diese Lagerung ist ein Winkel 25 vorgesehen an dem die Tastrolle 24 in Höhenrichtung mit einer Schraube 26 mit Differenzgewinde und seitlich mit einem Excenter 27 einstellbar gelagert ist.

Für die seitliche Tastung von Werkstück 7 dient ein Tastring 28, der mit einem Schlitten 29 gegen Wirkung einer Feder 30 verschiebbar verbunden ist.

Seine Tastfläche 31 läßt sich mit einer Verstellschraube 32 zum Fräswerkzeug 10 einstellen, eine schräge Anlauffläche 33 dient zum Verschieben des Tastrings 28 durch das Werkstück 7.

Zum Festhalten von Werkstück 7 dient eine druckluftbetriebene Klemmvorrichtung 34, die mit dem Untergestell 1 verbunden ist und mit der Auflagefläche 6 zusammenwirkt.

Zur Steuerung der Verschiebebewegung von Fräsmotor 11 dient eine erste Steuereinheit 35, die vom Schwenkmotor 18 beeinflußbar ist und je nach gewünschter Winkelstellung ein Aufsetzen oder Abheben des Fräsmotors 11 bewirkt. Dazu wird zunächst der Fräsmotor 11 mit anliegender Tastrolle 24 um die Ecke 9 von Werkstück 7 herumgeführt. Die entsprechenden Winkelwerte werden dabei in einem ersten Anzeigenfeld 36 der Steuereinheit 35 angezeigt. Durch Betätigung eines Bedienungsknopfes werden die entsprechenden Winkelstellungen in der ersten Steuereinheit eingespeichert, so daß diese bei den folgenden Fräsarbeiten die Verschiebebewegung von Fräsmotor 11 steuert.

Bei Seitenflächen 8 mit unsymetrischer Kontur muß das Werkstück 7 nach Bearbeitung der ersten Ecke umgeschlagen und so in die Profiliervorrichtung eingelegt werden, daß die seitherige Oberseite des Werkstücks 7 nach unten zeigt. Dabei wird in bestimmten Fällen ein Endschalter 37 vom Werkstück 7 betätigt, was zur Folge hat, daß eine zweite Steuereinheit 38 aktiviert wird. Diese bewirkt eine Umprogrammierung, so daß das Programm der umgekehrten Kontur angepaßt wird.

Zur Anpassung von Endschalter 37 an die verschiedenen Konturen der Seitenflächen ist dieser am Untergestell 1 verschiebbar und feststellbar gelagert.

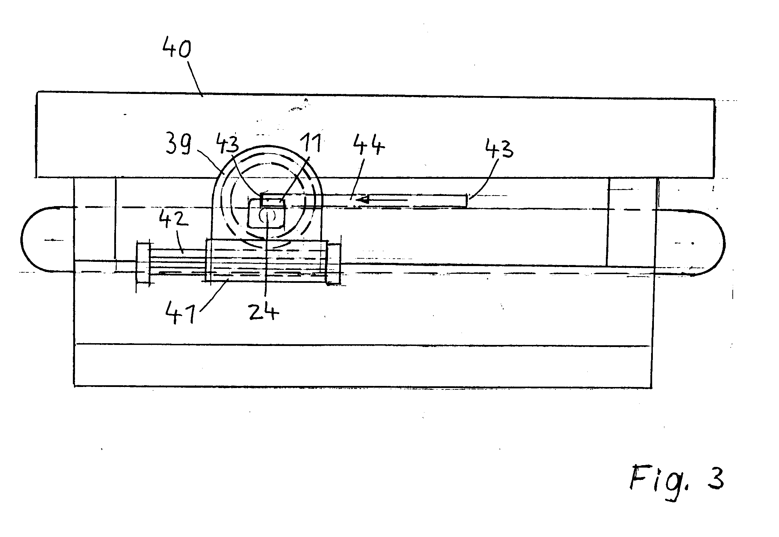

Wie Fig. 3 zeigt, ist es auch möglich, die Profiliervorrichtung 39 an einer Kantenanleimmaschine 40 anzuordnen. Die Profiliervorrichtung 39 ist dazu mit einem Schlitten 41 verbunden, der an Führungsstangen 42 der Kantenanleimmaschine 40 verschiebbar gelagert ist. Durch die Seitenflächen 43 des durchlaufenden Werkstücks 44 wird die Profiliervorrichtung 39 so mitgenommen und gesteuert, daß das Fräswerkzeug (10) das Werkstück 44 vollkommen umfährt und dabei die Längskanten und Ecken von Werkstück 44 profiliert. Das mit dem Fräsmotor 11 verbundene Fräswerkzeug wird dabei wieder mit einer Tastrolle 24 gesteuert.

## Patentansprüche

1. Profiliervorrichtung für Ecken (9) an plattenförmigen Werkstücken (7) mit einem Fräsmotor (11) mit Fräswerkzeug (10), der in einem Gehäuse (2) um eine zur Achse des Fräswerkzeugs (10) parallelen Achse schwenkbar und gegen das Werkstück (7) verschiebbar gelagert ist und mit Tastorganen (24, 28) zur Beeinflussung des Fräsmotors (11), dadurch gekennzeichnet, daß am Gehäuse (2) ein Schwenkorgan (13) um eine im Innern, des der vorderen Seitanfläche (8) benachbarten Bereichs des Werkstücks (7) liegende Achse (13'-) drehbar gelagert ist, auf dem der Fräsmotor (11) mit Fräswerkzeug (10) verschiebbar gelagert ist.

2. Profiliervorrichtung nach Anspruch 1, dadurch gekennzeichnet, daß die Achse (13'-) in der Mitte von Werkstück (7) und um die halbe Werkstückdicke von dessen vorderer Seitenfläche (8) entfernt liegt.

3. Profiliervorrichtung nach Anspruch 1 oder 2, dadurch gekennzeichnet, daß das Schwenkorgan (13) als kreisförmiger Führungsring ausgebildet ist, der in seinem Innenraum mit Führungsstangen (12) versehen ist, an denen der Fräsmotor (11) verschiebbar gelagert ist.

4. Profiliervorrichtung nach Anspruch 2, dadurch gekennzeichnet, daß das zwischen Führungsrollen (14) gelagerte Schwenkorgan (13) einen Zahnkranz (15) aufweist, an dem eine vom Schwenkmotor (18) antreibbare Zahnkette (16) angreift.

5. Profiliervorrichtung nach Anspruch 2 oder 3, dadurch gekennzeichnet, daß am Schwenkorgan (13) ein Gegengewicht (19) verschiebbar gelagert ist, das mit dem Fräsmotor (11) mit einem Seil (21) über eine Umlenkrolle (22) so verbunden ist, daß es zu diesem eine gegenläufige Bewegung ausführt.

6. Profiliervorrichtung nach einem der Ansprüche 1 - 4, dadurch gekennzeichnet, daß das Gehäuse (2) in einem Untergestell (1) angeordnet ist, daß das Untergestell (1) eine Auflagefläche (6) für das Werkstück (7) aufweist und daß das Gehäuse (2) am Untergestell (1) in Höhenrichtung verschiebbar gelagert ist.

7. Profiliervorrichtung nach Anspruch 5, dadurch gekennzeichnet, daß am Untergestell (1) eine Klemmvorrichtung (34) für das Werkstück (7) vorgesehen ist.

8. Profiliervorrrichtung nach einem der Ansprüche 1 - 6, dadurch gekennzeichnet, daß eine vom Schwenkmotor (18) beeinflußbare erste Steuereinheit (35) vorgesehen ist, die die Winkelstellung des Fräsmotors (11) anzeigt, daß die gewünschte Winkelstellung in die erste Steuereinheit (35) einspeicherbar ist und daß die erste Steuereinheit (35) das Verschiebeaggregat (23) so steuert, daß dieses den Fräsmotor (11) in einer gewünschten Winkelstellung bis zur Anlage des Tastorgans (24) gegen das Werkstück (7) verschiebt und ihn in einer zweiten Winkelstellung vom Werkstück (7) abhebt.

9. Profiliervorrichtung nach Anspruch 7, dadurch gekennzeichnet, daß eine vom Schwenkmotor (18) beeinflußbare zweite Steuereinheit (38) vorgesehen ist.

10. Profiliervorrichtung nach Anspruch 8, dadurch gekennzeichnet, daß am Gehäuse (2) ein Endschalter (37) angeordnet ist, der von einer Kante des Werkstücks (7) betätigbar ist und je nach Stellung die erste oder zweite Steuereinheit (35, 38) aktiviert.

11. Profiliervorrichtung nach Anspruch 9, dadurch gekennzeichnet, daß der Endschalter (37) am Untergestell (1) verschieb- und feststellbar angeordnet ist.

12. Profiliervorrichtung nach einem der Ansprüche 1 - 4, dadurch gekennzeichnet, daß die Profiliervorrichtung (39) auf einem parallel zur Vorschubrichtung der Werkstücke (44) bewegbaren Schlitten (41) einer Kantenanleimmaschine (40) angeordnet ist, daß der Schlitten (41) vom Werkstück (44) mitnehmbar ist und daß das mit dem Fräsmotor (11) verbundene Tastorgan (24) während des Durchlaufs am Werkstück (44) anliegt.

13. Profiliervorrichtung nach Anspruch 11, dadurch gekennzeichnet, daß das Fräswerkzeug (10) mit dem Tastorgan (24) so um das Werkstück geführt wird, daß alle Kanten der der Profiliervorrichtung (39) zugekehrten Seitenfläche profiliert werden.

## Claims

1. A profiling device for corners (9) on board-type workpieces (7) having a router motor (11) with router bit (10) that is mounted in a casing (2) swivellable about an axis parallel to the axis of said router bit (10) and movable in relation to said workpiece (7), and having sensing elements (24, 28) for influencing said router motor (11), characterised in that a swivelling element (13) is mounted on said casing (2) rotatable about an axis (13') located in the interior of that area of said workpiece (7) adjacent to the front side (8), on which element said router motor (11) with said router bit (10) is movably mounted.

2. A profiling device according to Claim 1, characterised in that said axis (13') is in the centre of said workpiece (7) and half the workpiece thickness distant from the front side (8) of said workpiece (7).

3. A profiling device according to Claim 1 or 2, characterised in that said swivelling element (13) is designed as a circular guide ring provided in its interior with guide rods (12) on which said router motor (11) is movably mounted.

4. A profiling device according to Claim 2, characterised in that said swivelling element (13) mounted between guide rollers (14) has a gear rim (15) in which engages a toothed chain (16) drivable by the swivelling motor (18).

5. A profiling device according to Claim 2 or 3, characterised in that a counterweight (19) is movably mounted on said swivelling element (13) and is connected to said router motor (11) by a cable (21) over a deflecting pulley (22) such that said counterweight (19) performs a movement in the opposite direction thereto.

6. A profiling device according to one of Claims 1 to 4, characterised in that said casing (2) is disposed in a base frame (1), in that said base frame (1) has a mounting surface (6) for said workpiece (7), and in that said casing (2) is mounted on said base frame (1) movable in the height direction.

7. A profiling device according to Claim 5, characterised in that a clamping device (34) for said workpiece (7) is provided on said base frame (1).

8. A profiling device according to one of Claims 1 to 6, characterised in that a first control unit (35) that can be influenced by said swivelling motor (18) is provided that indicates the angular position of said router motor (11), in that the required angular setting can be stored in said first control unit (35), and in that said first control unit (35) controls the movement unit (23) such that the latter moves said router motor (11) in a required angular setting towards said workpiece (7) until the sensing element (24) is in contact and lifts said router motor (11) off said workpiece (7) in a second angular setting.

9. A profiling device according to Claim 7, characterised in that a second control unit (38) that can be influenced by said swivelling motor (18) is provided.

10. A profiling device according to Claim 8, characterised in that a limit switch (37) is disposed on said casing (2) that is actuatable by an edge of said workpiece (7) and activates said first or second control unit (35, 38) depending on its setting.

11. A profiling device according to Claim 9, characterised in that said limit switch (37) is movably and lockably disposed on said base frame (1).

12. A profiling device according to one of Claims 1 to 4, characterised in that said profiling device (39) is disposed on a slide (41) of an edge banding machine (40) movable parallel to the feed direction of the workpieces (44), in that said slide (41) can be moved along by said workpiece (44), and in that said sensing element (24) connected to said router motor (11) is in contact with said workpiece (44) during passage.

13. A profiling device according to Claim 11, characterised in that the router bit (10) is guided around the workpiece with said sensing element (24) such that all edges of the side facing said profiling device (39) are profiled.

## Revendications

1. Dispositif à profiler pour coins (9) sur des pièces à travailler (7) en forme de plaques avec un moteur de fraisage (11) doté d'un outil de fraisage (10) pivotant, dans un boîtier (2), autour d'un axe parallèle à l'axe de l'outil de fraisage (10), et monté, tout en étant déplaçable, contre la pièce à travailler (7), et avec organes de palpage (24, 28) destinés à agir sur le moteur de fraisage (11), caractérisé en ce qu'est monté au niveau du boîtier (2) un organe pivotant (13) tournant autour d'un axe (13') se trouvant à l'intérieur de la zone de la pièce à travailler (7) voisine de la face latérale avant (8), sur lequel est monté, tout en étant déplaçable, le moteur de fraisage (11) avec l'outil de fraisage (10).

2. Dispositif de profilage suivant la revendication n° 1, caractérisé en ce que l'axe (13') se trouve au milieu de la pièce à travailler (7) et est éloigné de sa face latérale avant (8) d'une distance équivalent à la moitié de l'épaisseur de la pièce.

3. Dispositif de profilage suivant la revendication n° 1 ou 2, caractérisé en ce que l'organe pivotant (13') est conçu sous la forme d'une bague de guidage circulaire, laquelle est dotée de tiges de guidage (12) dans sa partie intérieure, tiges sur lesquelles est monté le moteur de fraisage (11) déplaçable.

4. Dispositif de profilage suivant la revendication n° 2, caractérisé en ce que l'organe pivotant (13) monté entre les galets de guidage (14) présente une couronne dentée (15) sur laquelle agit une chaîne dentée (16) entraînée par le moteur pivotant (18).

5. Dispositif de profilage suivant la revendication n° 2 ou 3, caractérisé en ce qu'est monté sur l'organe pivotant (13) un contre-poids (19) qui est relié au moteur de fraisage (11) à l'aide d'un câble (21), via une poulie de renvoi (22), de telle manière que le contre-poids exécute un mouvement opposé à celui-ci.

6. Dispositif de profilage suivant l'une des revendications n° 1 - 4, caractérisé en ce que le boîtier (2) est disposé dans un support (1), en ce que le support (1) présente une surface d'appui (6) destinée à la pièce à travailler (7) et en ce que le boîtier, déplaçable en hauteur, (2) est monté sur le support (1).

7. Dispositif de profilage suivant la revendication n° 5, caractérisé en ce qu'un dispositif de serrage (34) destiné à à la pièce à travailler (7) est prévu sur le support (1).

8. Dispositif de profilage suivant l'une des revendications n° 1 - 6, caractérisé en ce qu'est prévue une première unité de commande (35) sur laquelle peut agir le moteur pivotant (18), unité qui indique la position angulaire du moteur de fraisage (11), en ce que la position angulaire désirée peut être mémorisée dans la première unité de commande (35) et en ce que la première unité de commande (35) commande le groupe de déplacement (23) de telle manière que celui-ci déplace le moteur de fraisage (11), dans une position angulaire désirée, jusqu'à application de l'organe de palpage (24) contre la pièce à travailler (7) et l'éloigne de la pièce (7) dans une deuxième position angulaire.

9. Dispositif de profilage suivant la revendication n° 7, caractérisé en ce qu'est prévue une deuxième unité de commande (38) sur laquelle agit le moteur pivotant (18).

10. Dispositif de profilage suivant la revendication n° 8, caractérisé en ce qu'un fin de course (37) est prévu sur le boîtier, fin de course qui peut être actionné par un chant de la pièce à travailler (7) et qui active, suivant sa position, la première ou la deuxième unité de commande (35, 38).

11. Dispositif de profilage suivant la revendication n° 9, caractérisé en ce que le fin de course (37) est disposé sur le support (1), tout en pouvant être déplacé et bloqué.

12. Dispositif de profilage suivant l'une des revendications n° 1 - 4, caractérisé en ce que le dispositif de profilage (39) est disposé sur un chariot (41) d'une machine à plaquer les chants (40), chariot déplaçable parallèlement au sens d'avance des pièces à travailler (44), en ce que le chariot (41) est entraînable par la pièce à travailler (44) et en ce que l'organe de palpage (24) relié au moteur de fraisage (11) est appliqué contre la pièce à travailler (44) durant le passage.

13. Dispositif de profilage suivant la revendication n° 11, caractérisé en ce que l'outil de fraisage (10) est, avec l'organe de palpage (24), guidé autour de la pièce à travailler de telle manière que tous les chants de la face latérale adjacente au dispositif de profilage (39) sont profilés.
